# FASCICULE DE BREVET EUROPEEN

(11) **EP 0 678 609 B1**
(45) Date de publication et mention de la délivrance du brevet: **30.06.1999**
(21) Numéro de dépôt: 95400729.0
(22) Date de dépôt: 03.04.1995
(51) Int. Cl.: D04H 18/00, D04H 3/07

(54) **Procédé et machine pour la réalisation d'une armature pour une pièce de matière composite**
Verfahren und Vorrichtung zur Herstellung einer Verstärkung für einen Teil Verbundmaterial
Process and machine for the production of armature for a piece of composite material

(30) Priorité: 18.04.1994 FR 9404581
(43) Date de publication de la demande: 25.10.1995
(73) Titulaire: AEROSPATIALE Société Nationale Industrielle, 75781 Paris Cédex 16 (FR)
(72) Inventeur: Monget, François, F-33700 Merignac (FR); Cahuzac, Georges, F-33110 Le Bouscat (FR)
(74) Mandataire: Bonnetat, Christian

(56) Documents cités:
- EP-A- 0 284 497
- EP-A- 0 547 738
- DE-A- 3 712 013
- GB-A- 2 159 460
- US-A- 3 322 868
- US-A- 3 425 884

## Description

La présente invention concerne un procédé pour la réalisation d'une armature pour une pièce de matière composite, formée de ladite armature noyée dans une matrice durcie, ladite armature comprenant des nappes superposées de fil (en carbone, verre, bore, notamment), et une machine pour la mise en oeuvre dudit procédé, ainsi qu'une armature et une pièce de matière composite ainsi obtenues.

Plus particulièrement, quoique non exclusivement, de telles pièces de matière composite sont utilisées dans les domaines aéronautique et spatial en vertu de leurs excellentes propriétés de résistance aux contraintes mécaniques et/ou thermiques.

On connaît de nombreux procédés pour obtenir lesdites pièces de matière composite, et notamment leur armature. De façon générale, on commence par réaliser l'armature à partir de fibres (fils), en particulier minérales, distribuées suivant au moins deux directions, après quoi on introduit la matière de la matrice dans l'armature, et on durcit ladite matière pour former ladite matrice et, ainsi, ladite pièce composite.

Concernant, plus particulièrement, la réalisation de l'armature, il est décrit, par exemple, dans le brevet FR-A-2 408 676, un procédé et un dispositif utilisant un support (mandrin) sur lequel sont implantés des brins de fils rigides, formant des "picots", autour desquels sont déposées des nappes de fils dans deux directions différentes, lesdits picots solidarisant par ailleurs lesdites nappes entre elles.

L'utilisation de tels picots présente de nombreux inconvénients. Tout d'abord, les picots doivent être préalablement soumis à un traitement de rigidification, qui augmente leur diamètre, pour permettre leur implantation. De plus, les picots, destinés à devenir partie intégrante de la pièce à réaliser pour solidariser lesdites nappes, doivent par conséquent être prévus en un nombre considérable et implantés de façon très proche les uns des autres, ce qui représente une opération très longue et fastidieuse, exigeant une grande précision.

Par ailleurs, cette implantation rapprochée des picots est très difficile à réaliser sans interférences entre eux dans le cas d'une pièce présentant une forme complexe dont la surface forme des angles ou des courbes. Les "couloirs" très étroits que délimitent les picots ne permettent pas une dépose facile des fils en nappes régulières, dépose qui est même impossible dans les zones où les fils changent d'orientation.

De plus, les picots trop rapprochés les uns des autres tiennent mal, notamment dans les parties courbes, ce qui entraîne des défauts d'homogénéité dans la pièce finie.

Pour remédier, au moins partiellement, à ces inconvénients, on connaît, par le brevet EP-B-0 284 497 de la demanderesse, un procédé pour la réalisation d'une armature pour une pièce de matière composite, formée de ladite armature noyée dans une matrice durcie, ladite armature comprenant des nappes superposées de fil, procédé selon lequel :
- on réalise au moins certaines desdites nappes en déposant des tronçons de fil rectilignes faisant partie d'un fil continu sur un support, en tendant chaque tronçon de fil entre deux points de fixation en position des extrémités dudit tronçon, la nappe étant ainsi constituée de tronçons de fil s'étendant au moins sensiblement parallèlement les uns par rapport aux autres, et les tronçons de fil de ladite nappe s'étendant suivant une direction, soit parallèle, soit croisée par rapport à la direction des tronçons de fils d'une autre nappe quelconque de l'armature ; et
- on solidarise entre elles l'ensemble des nappes superposées par piquage sans nouage d'un fil continu traversant lesdites nappes.

Dans ce cas, pour déposer les tronçons de fil rectilignes constituant les nappes correspondantes, on utilise un dispositif particulier comportant un tube, ouvert à son extrémité inférieure et présentant une ouverture à sa partie supérieure, pour le passage d'un fil continu. Cette tête de dépose permet de tendre chaque tronçon de fil entre des points de fixation en position de ses extrémités, matérialisés par des épingles implantées provisoirement dans le support, réalisé en une matière pouvant être pénétrée par lesdites épingles, comme une mousse de matière synthétique. Après formation des nappes superposées de fil et solidarisation desdites nappes entre elles, les épingles sont retirées du support.

Bien que satisfaisant, ce procédé nécessite encore l'implantation d'un grand nombre d'épingles dans le support, avec les inconvénients qui lui sont liés, et l'utilisation d'une tête de dépose particulière des tronçons de fil.

La présente invention a pour but d'éviter les inconvénients des techniques antérieures décrites, et concerne un procédé pour la réalisation d'une armature pour une pièce de matière composite, telle que décrite, dans lequel l'implantation d'un grand nombre de picots, épingles ou analogues n'est plus nécessaire, et qui rend superflue l'utilisation d'une tête de dépose spécifique pour le fil.

A cet effet, le procédé pour la réalisation d'une armature pour une pièce de matière composite, du type décrit ci-dessus, est remarquable, selon l'invention, en ce que :
- on dépose lesdits tronçons de fil rectilignes par l'intermédiaire d'une aiguille, par rapport à laquelle peut coulisser le fil continu dont fait partie chacun desdits tronçons, ladite aiguille étant susceptible de se déplacer relativement audit support, en tendant le tronçon de fil rectiligne au-dessus de ce dernier, sur une course égale à la longueur dudit tronçon de fil rectiligne, et
- on fixe lesdits tronçons de fil rectilignes par piquage sans nouage d'au moins une des extrémités de chacun desdits tronçons de fil dans ledit support, à l'aide de ladite aiguille.

Ainsi, les tronçons de fil rectilignes de chaque nappe sont déposés et fixés au support, en étant guidés, sans qu' il soit nécessaire pour cela d'utiliser des épingles et une tête de dépose particulière. Plutôt, une simple aiguille, pouvant être de plus utilisée pour solidariser entre elles les nappes superposées, joue ces deux rôles, à savoir dépose (et guidage), et fixation en position des tronçons de fil rectilignes.

Pour une armature réalisée sur un support au moins sensiblement plan de façon à ce que ladite armature présente une forme de panneau, lesdites nappes superposées comprenant au moins des premières et secondes nappes, constituées chacune de tronçons de fil rectilignes s'étendant parallèlement les uns par rapport aux autres, les tronçons de fil des premières nappes s'étendant suivant une première direction et les tronçons de fil des secondes nappes s'étendant suivant une seconde direction croisée par rapport à ladite première direction, le procédé selon l'invention est remarquable en ce que les tronçons de fil rectilignes desdites premières et secondes nappes sont mis en place sur ledit support et fixés à celui-ci à l'aide de ladite aiguille déplacée relativement audit support et piquant au moins une des extrémités desdits tronçons dans ledit support.

Par ailleurs, pour une armature réalisée sur un support au moins sensiblement cylindrique de façon à ce que ladite armature présente une forme cylindrique correspondante, lesdites nappes superposées comprenant des premières nappes constituées chacune de tronçons de fil rectilignes s'étendant parallèlement les uns par rapport aux autres suivant une première direction, et des secondes nappes constituées de longueurs de fil continu réalisées par bobinage autour dudit support, le procédé selon l'invention est remarquable en ce que les tronçons de fil rectilignes desdites premières nappes sont mis en place sur ledit support et fixés à celui-ci à l'aide de ladite aiguille déplacée relativement audit support et piquant au moins une des extrémités desdits tronçons dans ledit support.

Avantageusement, lesdites premières et secondes nappes sont déposées de façon alternée sur ledit support.

Selon une autre caractéristique de l'invention, des nappes de tronçons de fil rectilignes sont déposées sur ledit support en formant un angle par rapport à la surface de celui-ci. Cet angle peut être inférieur ou égal à 15°.

Les nappes inclinées ainsi obtenues permettent notamment de réduire le phénomène d'ablation des nappes, lorsque la pièce de matière composite comportant une telle armature joue le rôle d'écran thermique, en supprimant l'effet de "pelage" accélérant ce phénomène, comme ce peut être le cas pour des nappes constituées de fils non inclinés.

Plus particulièrement, des nappes de tronçons de fil rectilignes successives sont formées, dont les tronçons de fil présentent des longueurs croissantes en fonction du rang desdites nappes et la même origine.

Avantageusement, la longueur des tronçons de fil rectilignes de la nappe de rang 1 étant L1, la longueur des tronçons de fil rectilignes de la nappe de rang x est Lx = xL1.

De préférence, des nappes sus-jacentes sont formées, dont l'origine des tronçons de fil rectilignes formant lesdites nappes est décalée, à chaque fois, par rapport à celle des nappes sous-jacentes.

Avantageusement, pour chaque nappe sus-jacente, ledit décalage est égal à L1 et la longueur des tronçons de fil formant lesdites nappes sus-jacentes est L = nL1, où n représente le nombre des nappes sous-jacentes dont les tronçons de fil ont des longueurs croissantes.

La présente invention concerne également une machine pour la mise en oeuvre du procédé ci-dessus, du type comportant un bâti pourvu d'un piétement et de montants présentant, chacun, une glissière pour le montage d'une barre transversale sur laquelle est monté un chariot, déplaçable suivant une première direction X, muni d'un premier bras s'étendant suivant une deuxième direction Y orthogonale à la direction X et portant un second bras pouvant coulisser transversalement par rapport au plan défini par ladite barre et ledit premier bras suivant une troisième direction Z, des moyens moteurs pour entraîner ledit chariot et lesdits premier et second bras, et un outil de piquage de fil monté sur le second bras, comportant, à son extrémité, une aiguille, remarquable en ce que ledit outil de piquage constitue également un outil de dépose de fil et est monté sur un support rotatif à l'extrémité inférieure duquel est agencée ladite aiguille.

Soit ladite aiguille est creuse et ledit support rotatif est traversé par un canal de guidage de fil raccordé à ladite aiguille.

Soit ladite aiguille présente un chas traversant oblique et est associée à un guide-fil comportant un corps traversé obliquement par un canal de passage de fil, dont l'extrémité inférieure est évasée.

De préférence, l'outil de dépose et de piquage comporte un mécanisme d'actionnement de l'ensemble pied-de-biche, guide-fil et aiguille, constitué d'un premier vérin actionnant une platine sur laquelle est monté ledit ensemble, un axe portant le guide-fil, et un second vérin actionnant le pied-de-biche.

Avantageusement, ladite aiguille est maintenue sur ladite platine, par l'intermédiaire d'un support, à l'aide d'une pince conique serrée par un écrou.

Par ailleurs, l'axe portant le guide-fil est sollicité par un ressort de traction et retenu par une butée.

Les figures du dessin annexé feront bien comprendre comment l'invention peut être réalisée. Sur ces figures, des références identiques désignent des éléments semblables.

Les figures 1 à 3 illustrent trois étapes d'un exemple de procédé selon l'invention pour la réalisation d'une armature pour une pièce de matière composite sur un support à surface supérieure convexe.

La figure 4 illustre la réalisation d'une armature selon l'invention sur un support cylindrique.

La figure 5 montre schématiquement en perspective une machine pour la réalisation de l'armature des figures 1 à 3.

La figure 6 est une vue schématique en perspective d'un dispositif de piquage pour la machine de la figure 5.

La figure 7 est une vue schématique en coupe illustrant un montage selon l'invention d'une aiguille de piquage.

Les figures 8 et 9 sont des vues en coupe longitudinale de deux variantes de réalisation de l'aiguille utilisée dans le procédé de l'invention.

La figure 10 montre, en coupe, un guide-fil pour l'aiguille de la figure 9.

La figure 11 illustre schématiquement une tête de piquage munie d'une aiguille et d'un guide-fil selon la figure 10.

Les figures 12A à 12H représentent différentes étapes de la dépose, selon l'invention, d'un tronçon de fil rectiligne.

Les figures 13A à 13D illustrent schématiquement le processus de solidarisation des nappes superposées de l'armature réalisée conformément à l'invention.

La figure 14 illustre schématiquement la réalisation de nappes superposées inclinées, constituant une variante de l'armature selon l'invention.

Les figures 15 à 19 montrent schématiquement en perspective différents exemples de pièces de matière composite comportant une armature réalisée conformément à l'invention.

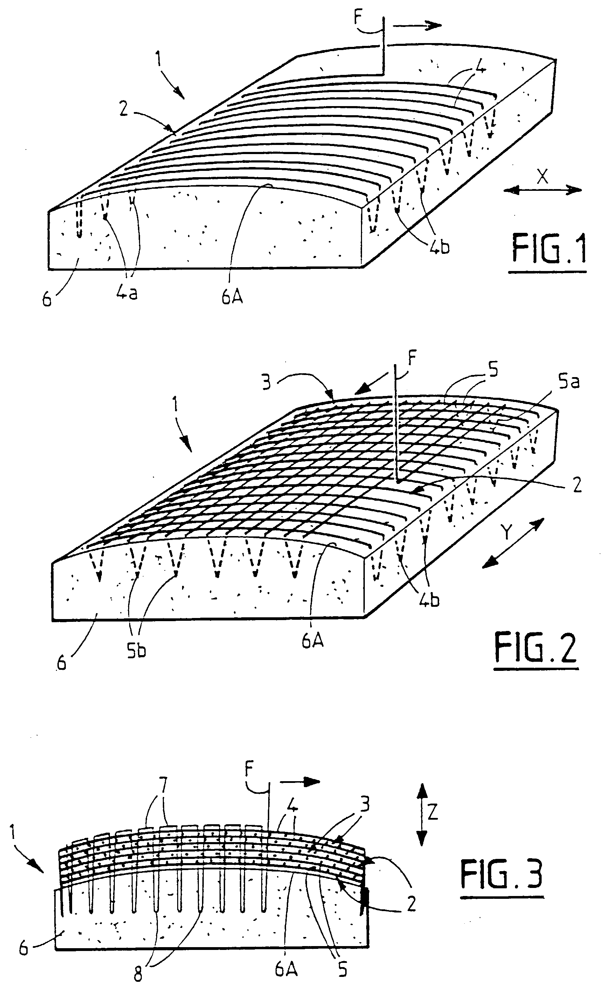

Sur les figures 1 à 3, on a représenté trois étapes de fabrication d'un exemple de réalisation d'une armature 1 selon l'invention, comportant des premières et secondes nappes superposées 2,3 de fil continu F.

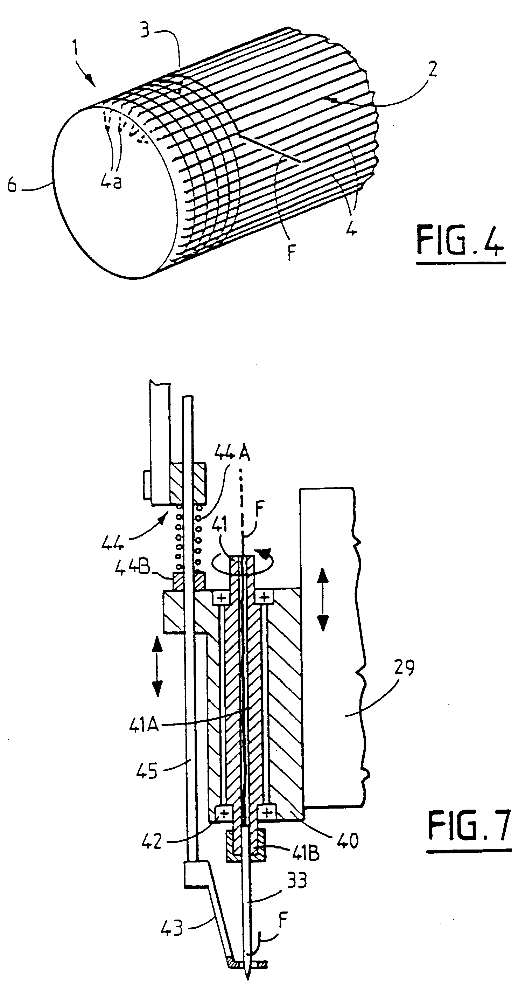

Plus particulièrement, chaque nappe 2,3 est réalisée en déposant des tronçons de fil rectilignes 4,5 faisant partie d'un fil continu F sur un support 6. Ce dernier doit être suffisamment rigide, tout en étant susceptible d'être pénétré par des aiguilles, comme on le verra plus en détail par la suite. Une matière appropriée pour le support 6 est une mousse de matière synthétique, notamment une mousse de polyuréthane. Par ailleurs, selon la forme de l'armature à réaliser, et donc de la pièce de matière composite dont elle fait partie, le support peut présenter toute forme appropriée à la réalisation de l'armature correspondante. Un exemple en est montré sur les figures 1 à 3, sur lesquelles le support 6 présente une surface supérieure convexe 6A, adaptée à la fabrication d'une armature ayant la forme d'un panneau courbe. Un autre exemple est illustré sur la figure 4, sur laquelle le support 6 est un mandrin cylindrique, permettant de réaliser une armature cylindrique correspondante.

Comme montré sur les figures 1 à 3, chaque nappe 2,3 est constituée de tronçons de fil 4,5 s'étendant parallèlement les uns par rapport aux autres. De plus, comme illustré sur ces figures, les tronçons de fil 4 des premières nappes 2 s'étendent suivant une première direction X, tandis que les tronçons de fil 5 des secondes nappes 3 s'étendent suivant une deuxième direction Y, croisée par rapport à la première direction X et notamment orthogonale par rapport à celle-ci, comme montré. L'armature 1, dans l'exemple de réalisation des figures 1 à 3, comprend donc une succession alternée de premières nappes 2 et de secondes nappes 3, dont les tronçons de fil rectilignes 4,5 s'étendent suivant deux directions croisées. En d'autres termes, l'armature 1 est une structure feuilletée, dont deux "feuilles" successives quelconques présentent des segments de fil (ou fibre) s'étendant suivant deux directions croisées. Chaque feuille de la structure comporte une ou, éventuellement, plusieurs "couches" de fil, constitué, comme déjà indiqué, de carbone, verre, bore, notamment.

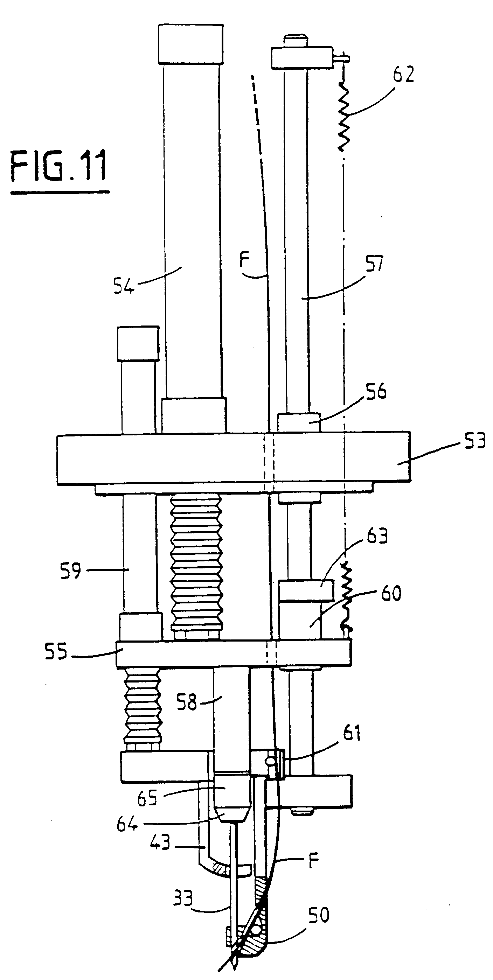

En outre, pour sa dépose, chaque tronçon de fil 4,5 est tendu entre deux points de fixation en position des extrémités 4a,4b ; 5a,5b dudit tronçon. Conformément à l'invention, et comme on le verra plus en détail par la suite, cela est réalisé par l'intermédiaire d'une aiguille, par rapport à laquelle peut coulisser le fil continu F dont fait partie chacun des tronçons 4,5, l'aiguille étant susceptible de se déplacer relativement au support 6, en tendant le tronçon de fil rectiligne 4,5 au-dessus de ce dernier, sur une course égale à la longueur du tronçon de fil rectiligne 4,5 qui est fixé par piquage sans nouage de ses extrémités 4a,4b ; 5a,5b dans le support 6, à l'aide de l'aiguille, en traversant éventuellement des nappes de fil déjà déposées, sous-jacentes. Ce processus sera décrit plus en détail en regard des figures 11A-11H.

Après formation de l'ensemble des nappes superposées 2,3, celles-ci sont solidarisées entre elles par piquage sans nouage suivant la direction Z d'un fil continu F traversant lesdites nappes, et formant des points de piqûre 7 à boucles ouvertures 8, ces dernières s'étendant dans le support 6, comme cela sera décrit plus en détail en regard des figures 12A à 12D.

On notera que, sur les figures 1 et 2, pour des raisons de représentation (écartement suffisant des tronçons de fil 4,5 pour rendre claire l'illustration), les boucles de fil formées aux extrémités 4a,4b ; 5a,5b apparaissent sous forme de V, alors qu'en réalité elles s'apparentent aux boucles 8 de la figure 3.

Par ailleurs, en supposant que la direction X est à 0° et la direction Y à 90°, il est bien sûr également possible de déposer des tronçons de fil selon un angle quelconque, notamment à 45° et 135°.

La figure 4 illustre le cas d'un support 6 cylindrique, pour la réalisation d'une armature, et donc d'une pièce de matière composite de forme correspondante. Ici, les nappes 2 dont les tronçons de fil 4 s'étendent parallèlement à la génératrice du cylindre sont déposées, comme précédemment, en piquant les deux extrémités de chaque tronçon de fil 4 dans le support 6, tandis que les secondes nappes 3 peuvent être simplement formées par bobinage d'un fil continu F autour du support cylindrique 6 ; les premières 2 et secondes 3 nappes étant déposées de façon alternée sur le support, c'est-à-dire qu'une nappe quelconque de l'armature est à chaque fois disposée entre deux nappes de l'autre catégorie, sauf bien sûr la nappe la plus inférieure (déposée directement contre le support) et la nappe la plus supérieure (formant la surface supérieure de l'armature).

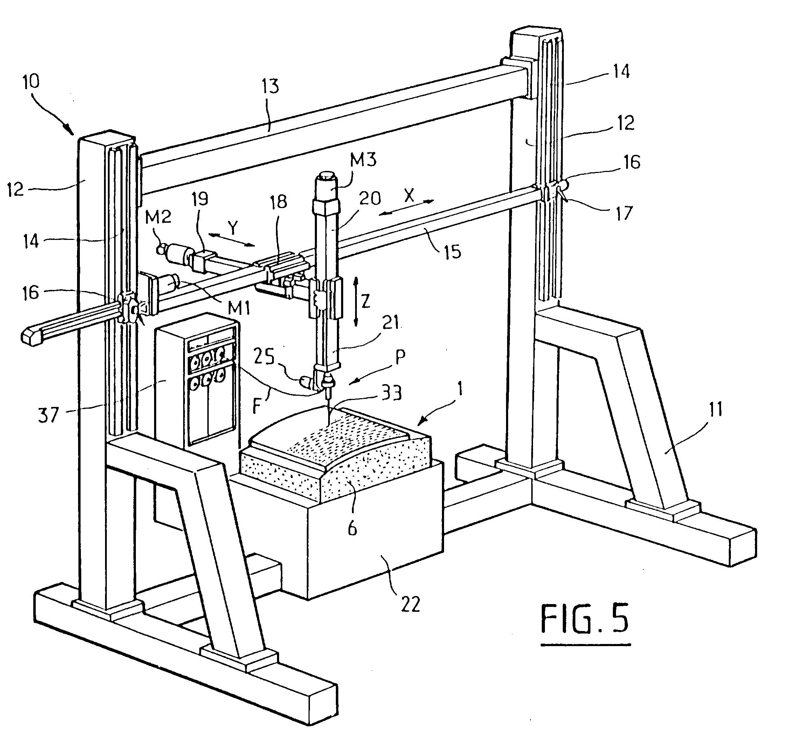

Pour réaliser, notamment, l'armature 1 montrée par les figures 1 à 3, on peut mettre en oeuvre la machine 10 ne nécessitant pas le nouage du fil F, illustrée schématiquement sur la figure 5 et décrite dans le brevet EP-B-0 284 497.

Cette machine 10 comporte un bâti pourvu d'un piétement 11 et de montants verticaux 12, réunis à leur partie supérieure par une traverse horizontale 13.

Chaque montant vertical 12 comporte une glissière 14, et une barre transversale 15 est fixée au voisinage de ses extrémités dans des coulisseaux 16 montés dans les glissières 14 dans lesquelles ils peuvent être immobilisés par des vis 17. Grâce à cet agencement, la barre 15 peut être réglée en hauteur sur les montants 12.

Sur la barre 15, est monté un chariot 18 sur lequel est prévu un bras horizontal 19 coulissant transversalement et de façon réglable par rapport à la barre 15.

A l'une de ses extrémités, le bras horizontal 19 porte un bras vertical 20 également monté coulissant et de façon réglable.

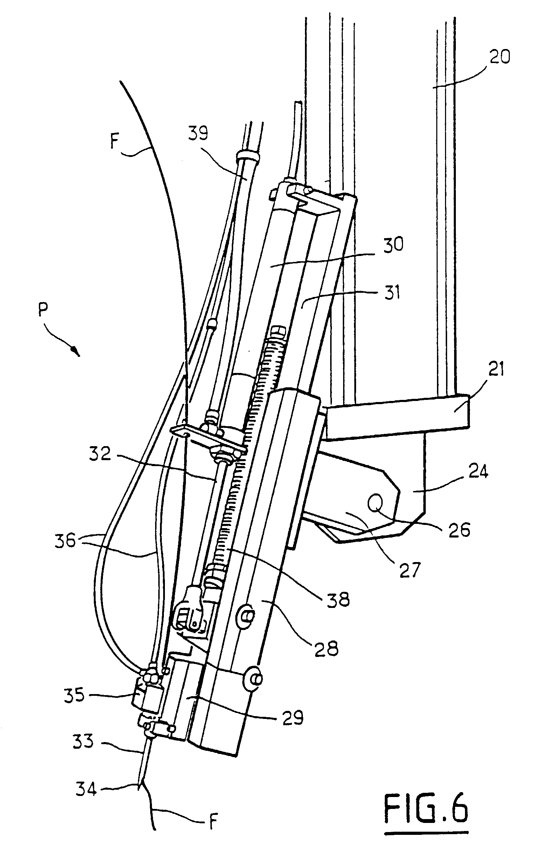

A son extrémité inférieure 21, le bras vertical 20 comporte des moyens de fixation adaptés pour recevoir un dispositif de dépose et de piquage P, plus clairement visible sur la figure 6.

La machine comprend de plus un socle 22, supportant un support 6 pour l'armature 1, présentant la forme montrée sur les figures 1 à 3.

On notera que, sur la figure 5, les nappes 2 et 3 ont déjà été déposées et que le dispositif de piquage P est en train d'effectuer la solidarisation des nappes superposées.

On comprend que, grâce à l'agencement de la barre 15 et des bras 19 et 20, l'extrémité 21 peut être réglée dans toute position désirée par rapport au support 6, suivant trois axes orthogonaux X, Y et Z au moyen de moteurs M1, M2 et M3 qui sont représentés, à titre d'exemple, montés sur la barre 15 et aux extrémités des bras 19 et 20 et entraînent ceux-ci suivant ces trois axes par l'intermédiaire de systèmes connus appropriés à pignon et crémaillère, vis sans fin ou autres.

Comme le montre la figure 6, l'extrémité inférieure 21 du bras 20 comporte une patte 24 fixée dans son prolongement et sur laquelle est fixé un moteur électrique 25, par exemple un moteur pas à pas, dont l'arbre 26 horizontal s'étend à travers la patte 24.

On remarquera que le dispositif de piquage P peut être orienté dans un plan vertical, grâce à l'action du moteur 25.

Le dispositif de piquage P, monté sur l'extrémité inférieure 21 du bras vertical 20, comprend un support 27, fixé sur l'arbre 26, sur lequel est fixé un rail 28, un bloc 29 coulissant dans le rail 28, un vérin pneumatique 30 dont le cylindre est fixé sur un prolongement 31 du rail 28, solidaire de ce dernier et dont la tige de piston 32 est reliée au bloc 29.

Le bloc 29 porte une aiguille 33, décrite en détail par la suite.

L'extrémité de l'aiguille, opposée à sa pointe 34, est fixée à côté d'un pince-fil pneumatique de type connu 35 monté sur le bloc 29.

Le pince-fil 35 est relié par des conduits 36 à une source d'air comprimé (non représentée) et le fil F, provenant d'une source 37, alimente ladite aiguille 33.

Un ressort de rappel 38 est prévu entre le bloc 29 et le rail 28, de sorte que, lorsque le vérin 30, alimenté par un tuyau 39, a poussé le bloc 29 en extension et est ensuite mis à l'échappement, le ressort 38 ramène le bloc 29 et l'aiguille en arrière.

On notera que, grâce au moteur M3 et/ou au vérin 30, on peut régler la profondeur de la pénétration de l'aiguille 33.

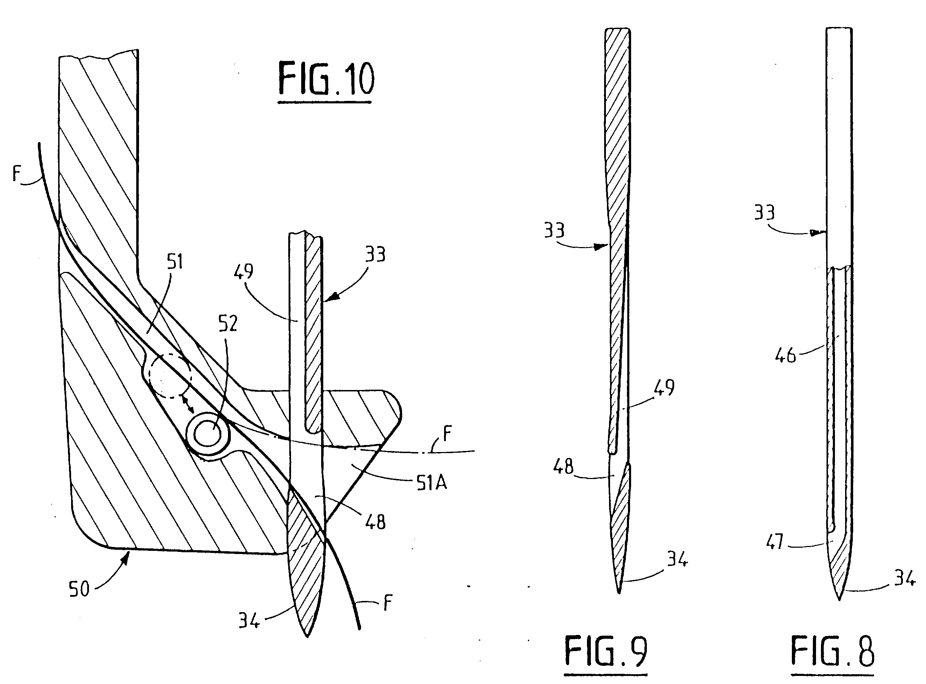

Par ailleurs, pour permettre le mouvement en va-et-vient de l'aiguille 33 par rapport au support 6 (pour déposer les tronçons successifs de fil d'une nappe), il est prévu, comme on le voit sur la figure 7, un support 40, monté sur le bloc 29, dans lequel est agencé un guide 41, pouvant tourner sur des roulements 42 grâce à des moyens d'entraînement non représentés, guide qui est traversé par un canal longitudinal 41A pour le passage du fil F et dont l'extrémité inférieure 41B porte l'aiguille 33. De plus, comme encore montré sur cette figure 7, un pied-de-biche 43 est associé à l'aiguille 33, lequel peut être animé d'un mouvement parallèle à l'extension longitudinale de l'aiguille à l'aide d'un mécanisme à ressort 44. Plus particulièrement, le mécanisme à ressort 44, commandant le pied-de-biche 43, comprend une barre de liaison 45, poussée vers le bas par un ressort de compression 44A et retenue par une butée 44B au contact du support 40 de l'aiguille 33, lorsque l'aiguille est en dehors des nappes déposées. Lorsque l'aiguille 33 descend, le pied-de-biche 43 est retenu par les nappes et le ressort 44A exerce un effort de compression sur celles-ci.

Comme illustré sur la figure 8, l'aiguille 33 peut être une aiguille creuse, traversée par un canal axial 46, pour le passage du fil, et comportant un chas non traversant 47, dans lequel débouche latéralement et obliquement le canal 46.

Toutefois, l'aiguille 33 peut être, avantageusement, comme représentée sur la figure 9, c'est-à-dire qu'elle comporte un chas traversant oblique 48 débouchant dans une gorge longitudinale 49 de section en arc de cercle, dont la profondeur diminue progressivement en s'éloignant de la pointe 34 de l'aiguille et dans laquelle le fil est destiné à passer.

Quand on utilise cette dernière aiguille, un guide-fil particulier peut être prévu, comme montré sur la figure 10. Le guide-fil présente un corps 50, sensiblement en forme de L, traversé obliquement par un canal 51 pour le passage du fil F, dont l'extrémité inférieure 51A est évasée pour permettre de guider le fil, soit de façon sensiblement verticale, soit de façon sensiblement horizontale (fil F représenté en traits mixtes), comme on le verra plus en détail par la suite. Un galet 52 libère le fil F en avançant dans le canal 51, et le coince en reculant dans ledit canal. En effet, c'est le glissement du fil qui, en tirant vers le bas, fait rouler le galet 52 en ouvrant le canal 51, alors qu'un mouvement en arrière ("remontée" du fil) bloque à nouveau le fil.

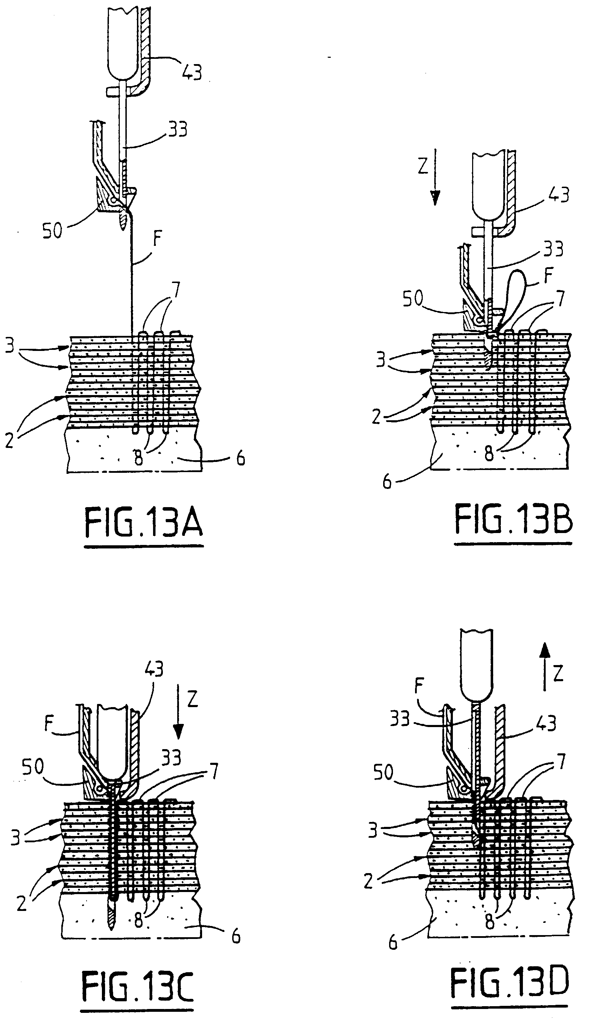

Sur la figure 11, il est montré une tête de piquage comportant l'ensemble pied-de-biche 43, guide-fil 50 et aiguille 33 (figure 13). Sur une bride circulaire 53 qui peut être fixée, en pouvant tourner, sur le porte-outil de la machine 10, est vissé un vérin pneumatique 54 qui actionne une platine 55. Par ailleurs, la bride 53 porte une douille à billes 56 de guidage d'un axe 57. La platine 55 quant à elle porte un support 58 de l'aiguille 33, un vérin auxiliaire 59, et une seconde douille à billes 60 coulissant sur l'axe 57. Le vérin auxiliaire 59 porte le pied-de-biche 43 et un pince-fil 61 (analogue au guide-fil 50) pour le fil F, tandis que l'axe de guidage 57 porte le guide-fil ou pince-fil 50, en étant sollicité par le ressort de traction 62 et retenu par une butée 63. L'aiguille 33 est maintenue sur le support 58 à l'aide d'une pince conique 64 serrée par un écrou 65.

On a représenté sur les figures 12A à 12H différentes étapes de la dépose, selon l'invention, d'un tronçon de fil rectiligne. Pour des commodités de représentation, on a supposé, sur ces figures, que le tronçon de fil déposé appartenait à une première nappe 2 dont les tronçons de fil s'étendent suivant la direction X et que cette nappe était la plus inférieure de l'armature, c'est-à-dire qu'elle était déposée directement sur le support plan 6. Il va de soi que le principe de dépose illustré sur ces figures 12A à 12H est valable pour n'importe quelle nappe de l'armature, constituée de tronçons de fil rectilignes et quel que soit ce tronçon. Par ailleurs, les différentes opérations décrites peuvent être réalisées à l'aide de la machine 10 de la figure 5, notamment.

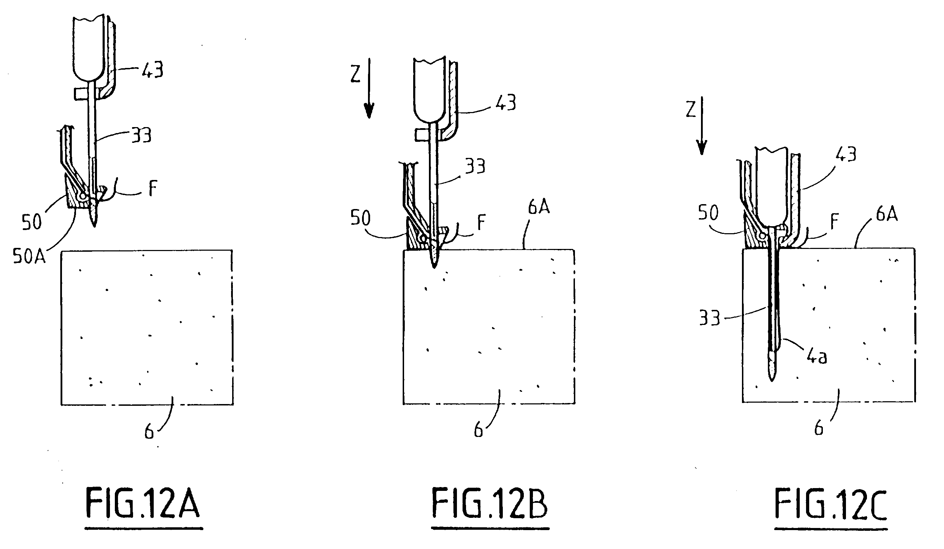

L'aiguille 33, avec le pied-de-biche 43 et le guide-fil 50, étant dans la position représentée sur la figure 12A au voisinage d'une extrémité du support 6, l'ensemble est tout d'abord descendu, parallèlement à la direction Z, dans la position illustrée par la figure 12B, dans laquelle la face inférieure 50A du guide-fil 50 repose sur la surface supérieure 6A du support 6, tandis que l'aiguille a commencé de pénétrer dans le support 6. Ensuite, l'aiguille 33 pénètre "profondément" dans le support 6, entraînant le fil F, en même temps que le pied-de-biche 43 descend contre le support 6, permettant la formation et le blocage de la boucle ouverte 4a (figure 12C).

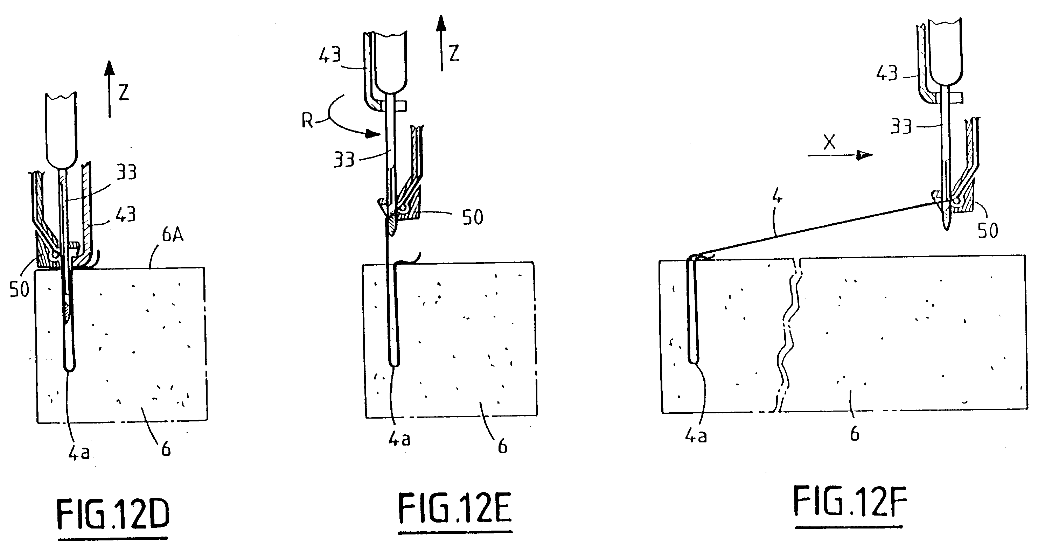

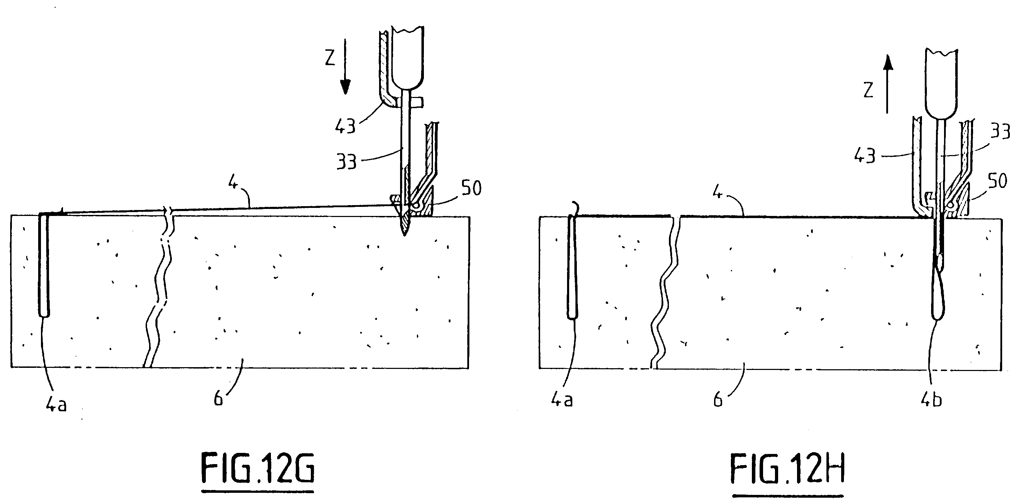

Dans l'étape suivante (figure 12D), l'aiguille 33 est remontée suivant la direction Z, tandis que la boucle de fil demeure dans le support grâce au frottement entre la matière de fil et la matière du support et au fait que le fil est maintenu par le pied-de-biche 43 restant en position basse en appui contre le support. Puis, l'ensemble aiguille 33 - pied-de-biche 43 - guide-fil 50 est remonté, et tourné de 180° (flèche R, figure 12E), après quoi l'ensemble est entraîné en translation dans la direction X vers l'autre extrémité du support 6 (figure 12F). Cela peut être réalisé à l'aide des moyens d'entraînement faisant partie de la machine 10 montrée sur la figure 5. Le fil, dévidé de sa bobine et coulissant par rapport à l'aiguille 33, est ainsi tendu, au-dessus du support 6, entre le premier point de piqûre (extrémité 4a) et le point de piqûre (extrémité 4b) à l'extrémité opposée du support 6, en formant un tronçon rectiligne 4 (figures 12G et 12H). Le point de piqûre à l'extrémité 4b est formé de la même manière que celui à l'extrémité 4a. On voit ainsi que le tronçon de fil rectiligne 4 est guidé et maintenu sur le support 6 par simple piquage du fil, aux deux extrémités du tronçon, dans le support. Il n'est donc plus nécessaire d'utiliser des épingles ou moyens analogues pour ce faire.

Pour la solidarisation entre elles des nappes superposées 2,3, on effectue, comme montré sur les figures 13A à 13D, un piquage dans la direction Z. Pour ce faire, pendant l'introduction de l'aiguille 33 dans les nappes 2,3, le fil F est entraîné par ladite aiguille à travers les nappes 2,3 (figure 13B), le pince-fil (non représenté sur les figures 13A à 13D) étant serré et la course de l'aiguille étant réglée de façon à pénétrer dans le support 6. Pendant le retrait de l'aiguille 33 hors des nappes 2,3, le pince-fil est desserré et l'aiguille se retire en libérant le fil F au fur et à mesure à travers les nappes 2,3, en formant ainsi une boucle non fermée 8 qui est uniquement retenue par la mousse dont est formé le support et par le frottement du fil dans les nappes 2 et 3 (figures 13C, 13D).

Ainsi, c'est grâce à la pression élastique de la mousse se refermant sur la boucle après le retrait de l'aiguille d'une part, et au frottement et au serrage dans les nappes 2,3 d'autre part, que, lors du retrait de l'aiguille, le fil F, qui défile librement dans l'aiguille pendant ce retrait, est retenu pour former la boucle ouverte 8.

Après l'avoir ressortie des nappes 2 et 3, on fait remonter l'aiguille au-dessus de la surface desdites nappes, d'une distance égale à l'épaisseur à piquer augmentée du pas de piquage 7, c'est-à-dire l'écartement désiré entre deux piqûres.

On actionne alors le pince-fil pour bloquer le fil dans l'aiguille, on déplace le bras 20 d'un pas, et on actionne de nouveau le dispositif pour recommencer le cycle afin de former en continu une grande quantité de boucles avec le même fil F, c'est-à-dire pour former les points de piqûre 8 d'une rangée.

Bien entendu, en agissant sur le moteur M2 à la fin d'une rangée, on peut provoquer un déplacement relatif de guille 33 par rapport à l'armature 1, pour pouvoir effectuer la rangée de boucles suivante. Par ailleurs, par action du moteur 25, on peut régler, le cas échéant, l'inclinaison de l'aiguille 33 autour de l'axe 26, et donc l'inclinaison désirée pour les boucles 8 de chaque rangée.

On remarquera que, dans le cas d'une forme complexe, notamment non développable, il pourrait être nécessaire de monter le dispositif de piquage P à l'extrémité d'un bras mobile suivant un très grand nombre de degrés de liberté (par exemple 7).

Cette technique est également décrite dans le brevet EP-B-0 284 497. Toutefois, dans le cas présent, on peut utiliser avantageusement l'aiguille (avec son pied-de-biche et son guide-fil) des figures 12A à 12H.

A cet égard, considérant également la figure 11, la descente de l'aiguille 33 est assurée par le vérin 54 qui descend en entraînant la platine 55 et donc toutes les pièces fixées sur celle-ci. Au début de cette descente, c'est-à-dire avant la pénétration de l'aiguille 33 dans les nappes superposées 2,3, le fil F est maintenu par le pince-fil 61 et le guide-fil 50, jouant également le rôle de pince-fil, et forme une boucle (figure 13A).

Lorsque l'aiguille 33 pénètre dans les nappes 2,3, le guide-fil 50 vient au contact de ces nappes, en immobilisant l'axe 57, et le fil F glisse dans le guide-fil 50, tandis que la boucle de fil précédemment formée est enfoncée dans les nappes (figure 13B). L'aiguille 33 étant arrivée dans sa position la plus inférieure (figure 13C), le pied-de-biche 43 est amené au contact de la nappe la plus supérieure par commande du vérin 59 pour le faire descendre, ce qui assure le tassement des nappes superposées, puis on commande la remontée du vérin 54 et, ainsi, de l'aiguille 33 (figure 13D).

Lorsque l'aiguille 33 remonte à travers les nappes 2,3, le pied-de-biche 43 reste appuyé contre ces dernières sous la poussée du vérin associé 59. Le fil est coincé alors par les pince-fils. Lorsque la butée 63 revient au contact de la douille 60, le guide-fil 50 remonte avec l'aiguille 33 et le fil coulisse dans celui-ci. La fin de la remontée de l'aiguille 33 commande la remontée du pied-de-biche 43. Le fil est coincé par le guide-fil 50 et coulisse dans le pince-fil supérieur 61.

On notera que la longueur de fil consommée au cours de chaque piquage peut être mesurée par la rotation d'un codeur (non représenté) et comparée à une valeur programmée.

Dans ce cas, la tenue mécanique de l'armature est essentiellement obtenue par la friction du fil de solidarisation sur les tronçons de fil constituant les nappes superposées, sans appliquer de contrainte sur ledit fil de solidarisation, et cela grâce au tassement préalablement effectué des nappes superposées pour atteindre une densité suffisante des tronçons de fil qui les constituent. Cela est particulièrement utile dans le cas où l'on réalise des plaques (planes ou courbes), c'est-à-dire ne comportant pas de bobinages circonférentiels assurant déjà une tenue de l'armature. La densité des tronçons de fil constituant les nappes superposées est telle que les tronçons de fil occupent au moins 40% du volume de la pièce de matière composite, le restant étant occupé par le fil de solidarisation et la matrice. De préférence, les tronçons de fil occupent entre 40 et 60% du volume de la pièce de matière composite, tandis que le fil de solidarisation occupe de 1 à 10% du volume de la pièce de matière composite.

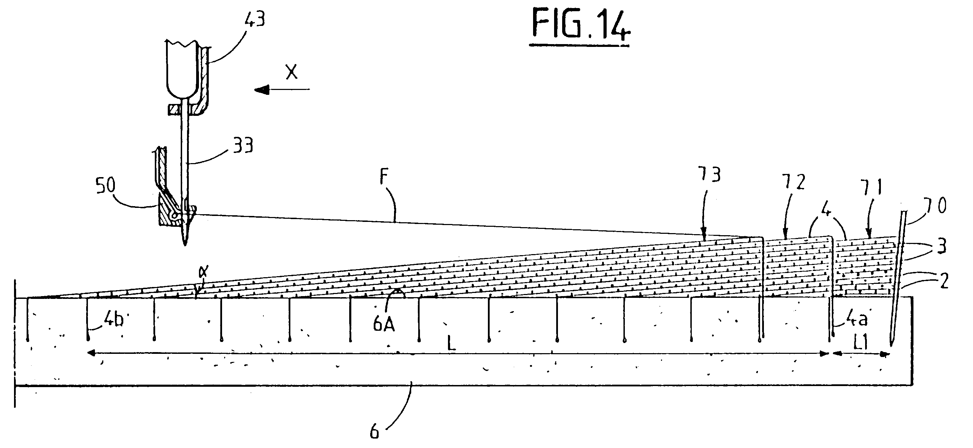

Sur la figure 14, on a illustré une variante du procédé selon l'invention, dans laquelle des nappes de fil (par exemple les nappes 2 dont les tronçons de fil 4 s'étendent suivant la direction X) sont déposées sur le support 6 en formant un angle α, inférieur ou égal à 15°, par rapport à la surface 6A du support 6. On notera que, dans le cas d'un support cylindrique, cet angle α est considéré par rapport à la génératrice du cylindre.

Plus précisément, dans ce cas, on réalise tout d'abord une "cale" 71 (ou première "tuile") constituée de tronçons rectilignes de fil, ayant une même origine, matérialisée, comme montré, par une épingle 70 autour de laquelle passent lesdits tronçons (cette épingle pouvant être également remplacée par des points de piqûre comme précédemment), et une longueur croissante depuis la nappe 2 la plus inférieure (contre le support) de rang 1 jusqu'à la nappe la plus supérieure de rang n, de sorte que la longueur des tronçons de la nappe la plus inférieure étant L1, désignée comme "pas de construction de la pente", la longueur des tronçons des nappes suivantes est de préférence Lx = xL1 (x étant un nombre entier désignant le rang de la nappe considérée). Entre deux nappes successives réalisées de cette façon, on dispose une nappe 3 dont les tronçons de fil s'étendent dans une direction croisée par rapport à la direction X, notamment la direction Y orthogonale à X, et cela par exemple par bobinage ou d'une autre façon comme celle précédemment décrite, selon la géométrie du support. Cela assure au moins partiellement le compactage des nappes réalisées auparavant.

Pour mettre en oeuvre ce procédé, on peut utiliser la machine 10 illustrée sur la figure 5, comportant l'ensemble aiguille 33, pied-de-biche 43 et guide-fil 50, comme montré sur la figure 14.

Pour réaliser les "tuiles" suivantes 72, 73, ..., on décale l'origine des tronçons de fil 4 d'un pas (longueur L1), et on dépose une longueur de fil L égale à la longueur des tronçons de fil de la nappe la plus supérieure de la tuile précédente (L=nL1). Chaque tuile ainsi réalisée comporte une nappe ainsi formée (comme montré sur la figure 14). Comme précédemment, une nappe, dont les tronçons de fil s'étendent suivant une direction croisée, est prévue entre deux nappes formant les tuiles successives.

La solidarisation des nappes superposées 2,3 est obtenue, comme précédemment, par piquage suivant la direction Z (figure 3 et figures 13A à 13D).

Cette structure comportant des nappes inclinées permet de contrecarrer le phénomène d'ablation des nappes en supprimant l'effet de "pelage" accélérant ledit phénomène. En effet, en service comme écran thermique, dans la pièce de matière composite comportant une telle armature, seule une partie des nappes de l'armature peut être exposée au flux chaud, ce qui augmente la résistance à l'ablation de l'écran thermique. Par ailleurs, les nappes étant inclinées, la diffusion de la chaleur est plus lente de l'extérieur vers l'intérieur de l'écran thermique.

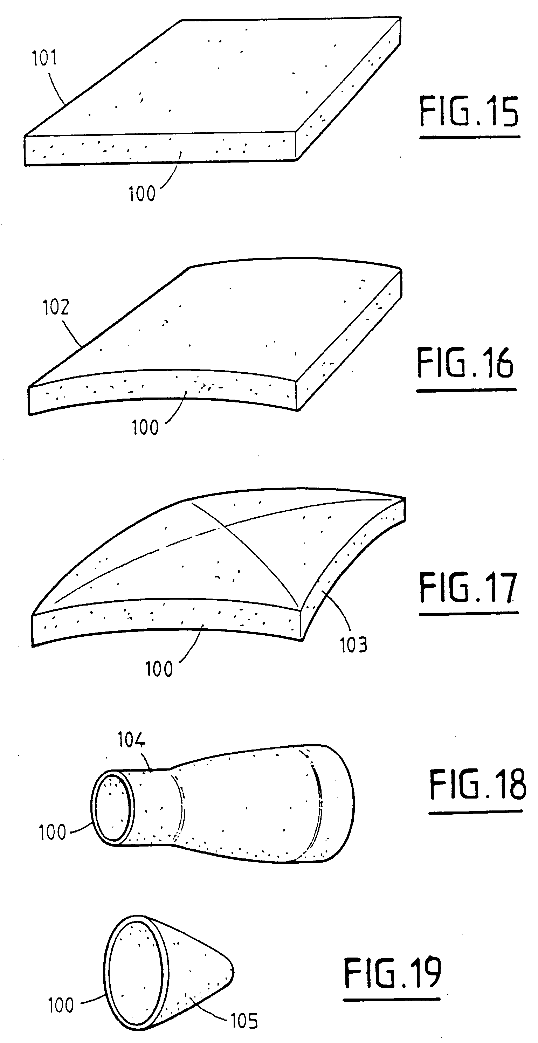

Les figures 15 à 19 montrent, à titre d'exemples, différentes pièces de matière composite, comportant une armature réalisée conformément à l'invention noyée dans une matrice durcie 100. Ainsi, la figure 15 montre un panneau plan 101, la figure 16 un panneau convexe 102 (comportant l'armature des figures 1 à 3), la figure 17 un panneau bi-convexe 103, la figure 18 une tuyère 104 d'un moteur-fusée, et la figure 19 un nez d'engin spatial.

## Revendications

1. Procédé pour la réalisation d'une armature pour une pièce de matière composite, formée de ladite armature noyée dans une matrice durcie, ladite armature comprenant des nappes superposées de fil, procédé selon lequel :
- on réalise au moins certaines desdites nappes en déposant des tronçons de fil rectilignes faisant partie d'un fil continu sur un support, en tendant chaque tronçon de fil entre deux points de fixation en position des extrémités dudit tronçon, la nappe étant ainsi constituée de tronçons de fil s'étendant au moins sensiblement parallèlement les uns par rapport aux autres, et les tronçons de fil de ladite nappe s'étendant suivant une direction, soit parallèle, soit croisée par rapport à la direction des tronçons de fils d'une autre nappe quelconque de l'armature ; et
- on solidarise entre elles l'ensemble des nappes superposées par piquage sans nouage d'un fil continu traversant lesdites nappes,
caractérisé en ce que :
- on dépose lesdits tronçons de fil rectilignes (4,5) par l'intermédiaire d'une aiguille (33), par rapport à laquelle peut coulisser le fil continu (F) dont fait partie chacun desdits tronçons, ladite aiguille étant susceptible de se déplacer relativement audit support (6), en tendant le tronçon de fil rectiligne (4,5) au-dessus de ce dernier, sur une course égale à la longueur dudit tronçon de fil rectiligne ; et
- on fixe lesdits tronçons de fil rectilignes (4,5) par piquage sans nouage d'au moins une des extrémités (4a,4b ; 5a,5b) de chacun desdits tronçons de fil dans ledit support (6), à l'aide de ladite aiguille (33).

2. Procédé selon la revendication 1, pour une armature réalisée sur un support au moins sensiblement plan de façon à ce que ladite armature présente une forme de panneau, lesdites nappes superposées comprenant au moins des mières et secondes nappes, constituées chacune de tronçons de fil rectilignes s'étendant parallèlement les uns par rapport aux autres, les tronçons de fil des premières nappes s'étendant suivant une première direction et les tronçons de fil des secondes nappes s'étendant suivant une seconde direction croisée par rapport à ladite première direction,
caractérisé en ce que les tronçons de fil rectilignes (4,5) desdites premières (2) et secondes (3) nappes sont mis en place sur ledit support (6) et fixés à celui-ci à l'aide de ladite aiguille (33) déplacée relativement audit support (6) et piquant au moins une des extrémités (4a,4b ; 5a,5b) desdits tronçons (4,5) dans ledit support (6).

3. Procédé selon la revendication 1, pour une armature réalisée sur un support au moins sensiblement cylindrique de façon à ce que ladite armature présente une forme cylindrique correspondante, lesdites nappes superposées comprenant des premières nappes constituées chacune de tronçons de fil rectilignes s'étendant parallèlement les uns par rapport aux autres suivant une première direction, et des secondes nappes constituées de longueurs de fil continu réalisées par bobinage autour dudit support,
caractérisé en ce que les tronçons de fil rectilignes (4) desdites premières nappes (2) sont mis en place sur ledit support (6) et fixés à celui-ci à l'aide de ladite aiguille (33) déplacée relativement audit support et piquant au moins une des extrémités (4a,4b) desdits tronçons (4) dans ledit support (6).

4. Procédé selon l'une quelconque des revendications 1 à 3,
caractérisé en ce que lesdites premières (2) et secondes (3) nappes sont déposées de façon alternée sur ledit support (6).

5. Procédé selon l'une quelconque des revendications 1 à 4,
caractérisé en ce que des nappes (71, 72, 73) de tronçons de fil rectilignes sont déposées sur ledit support (6) en formant un angle (α) par rapport à la surface de celui-ci.

6. Procédé selon la revendication 5,
caractérisé en ce que ledit angle (α) est inférieur ou égal à 15°.

7. Procédé selon la revendication 5 ou la revendication 6,
caractérisé en ce que des nappes (71) de tronçons de fil rectilignes successives sont formées, dont les tronçons de fil (4) présentent des longueurs croissantes en fonction du rang desdites nappes et la même origine.

8. Procédé selon la revendication 7,
caractérisé en ce que, la longueur des tronçons de fil rectilignes de la nappe (71) de rang 1 étant L1, la longueur des tronçons de fil rectilignes (4) de la nappe de rang x est Lx = xL1.

9. Procédé selon la revendication 7 ou la revendication 8,
caractérisé en ce que des nappes sus-jacentes (72,73) sont formées, dont l'origine des tronçons de fil rectilignes formant lesdites nappes est décalée, à chaque fois, par rapport à celle des nappes (71) sous-jacentes.

10. Procédé selon la revendication 8 et la revendication 9,
caractérisé en ce que, pour chaque nappe sus-jacente (72, 73), ledit décalage est égal à L1 et la longueur des tronçons de fil formant lesdites nappes sus-jacentes est L = nL1, où n représente le nombre des nappes (71) sous-jacentes dont les tronçons de fil ont des longueurs croissantes.

11. Machine pour la mise en oeuvre du procédé selon l'une quelconque des revendications 1 à 10, du type comportant un bâti pourvu d'un piétement et de montants présentant, chacun, une glissière pour le montage d'une barre transversale sur laquelle est monté un chariot, déplaçable suivant une première direction X, muni d'un premier bras s'étendant suivant une deuxième direction Y orthogonale à la direction X et portant un second bras pouvant coulisser transversalement par rapport au plan défini par ladite barre et ledit premier bras suivant une troisième direction Z, des moyens moteurs pour entraîner ledit chariot et lesdits premier et second bras, et un outil de piquage de fil monté sur le second bras, comportant, à son extrémité, une aiguille,
caractérisée en ce que ledit outil de piquage constitue également un outil de dépose de fil et est monté sur un support rotatif (41,53) à l'extrémité inférieure duquel est agencée ladite aiguille (33).

12. Machine selon la revendication 11,
caractérisée en ce que ladite aiguille (33) est creuse et en ce que ledit support rotatif (41) est traversé par un canal de guidage de fil (41A) raccordé à ladite aiguille.

13. Machine selon la revendication 11,
caractérisée en ce que ladite aiguille (33) présente un chas traversant oblique (48) et est associée à un guide-fil (50) comportant un corps traversé obliquement par un canal de passage de fil (51), dont l'extrémité inférieure (51A) est évasée.

14. Machine selon l'une quelconque des revendication 11 à 13,
caractérisée en ce que l'outil de dépose et de piquage comporte un mécanisme d'actionnement de l'ensemble pied-de-biche (43), guide-fil (50) et aiguille (33), constitué d'un premier vérin (54) actionnant une platine (55) sur laquelle est monté ledit ensemble, un axe (57) portant le guide-fil et un second vérin (59) actionnant le pied-de-biche (43).

15. Machine selon la revendication 14,
caractérisée en ce que ladite aiguille (33) est maintenue sur ladite platine (55), par l'intermédiaire d'un support (58), à l'aide d'une pince conique (64) serrée par un écrou (65).

16. Machine selon la revendication 14 ou la revendication 15,
caractérisée en ce que l'axe (57) portant le guide-fil (50) est sollicité par un ressort de traction (62) et retenu par une butée (63).

## Patentansprüche

1. Verfahren zur Herstellung einer Verstärkung für ein Teil aus Verbundmaterial, das aus der in einer ausgehärteten Matrix eingelagerten Verstärkung besteht, wobei die Verstärkung übereinanderliegende Fadengelege umfaßt, nach dem:
- mindestens einige Gelege durch das Ablegen geradliniger Fadenabschnitte eines Endlosfadens auf einer Unterlage hergestellt werden, indem jeder Fadenabschnitt zwischen zwei Lagefixierungspunkten der Abschnittsenden gespannt wird, so daß das Gelege aus Fadenabschnitten gebildet wird, die zumindest annähernd parallel zueinander verlaufen, und die Fadenabschnitte des Geleges nach einer Richtung entweder parallel oder quer zur Richtung der Fadenabschnitte eines anderen Geleges der Verstärkung verlaufen, und
- alle übereinanderliegenden Gelege miteinander verbunden werden, indem ein Endlosfaden ohne Verschlingung durch die Gelege genäht wird,
dadurch gekennzeichnet, daß:
- die geradlinigen Fadenabschnitte (4,5) mit Hilfe einer Nadel (33), der gegenüber der Endlosfaden (F) jedes Fadenabschnitts gleiten kann, abgelegt werden, wobei sich die Nadel im Verhältnis zur Unterlage (6) bewegen kann und den geradlinigen Fadenabschnitt (4,5) über dieser über eine Strecke spannt, die gleich der Länge des geradlinigen Fadenabschnitts ist; und
- die geradlinigen Fadenabschnitte (4,5) befestigt werden, indem mindestens eines der Enden (4a,4b; 5a,5b) jedes Fadenabschnitts mit Hilfe der Nadel (33) ohne Verschlingung in die Unterlage (6) eingenäht wird.

2. Verfahren nach Anspruch 1 für eine Verstärkung, die auf einer mindestens annähernd ebenen Unterlage hergestellt wird, so daß die Verstärkung plattenförmig ist, wobei die übereinanderliegenden Gelege zumindest erste und zweite Gelege haben, die jeweils aus geradlinigen parallel zueinander verlaufenden Fadenabschnitten bestehen, wobei die Fadenabschnitte der ersten Gelege nach einer ersten Richtung und die Fadenabschnitte der zweiten Gelege nach einer zweiten Richtung quer zur ersten Richtung verlaufen,
dadurch gekennzeichnet, daß die geradlinigen Fadenabschnitte (4,5) der ersten (2) und zweiten (3) Gelege auf der Unterlage (6) angeordnet und an dieser mit Hilfe der Nadel (33) befestigt werden, die gegenüber der Unterlage (6) verschoben werden kann und mindestens ein Ende (4a,4b; 5a,5b) der Fadenabschnitte (4,5) in die Unterlage (6) einnäht.

3. Verfahren nach Anspruch 1 für eine Verstärkung, die auf einer zumindest annähernd zylindrischen Unterlage hergestellt wird, so daß die Verstärkung eine entsprechende zylindrische Form hat, wobei die übereinanderliegenden Gelege erste Gelege, die jeweils aus geradlinigen parallel zueinander nach einer ersten Richtung verlaufenden Fadenabschnitten bestehen, und zweite Gelege aus Endlosfadenlängen haben, die um die Unterlage gewickelt werden,
dadurch gekennzeichnet, daß die geradlinigen Fadenabschnitte (4) der ersten Gelege (2) auf der Unterlage (6) angeordnet und an dieser mit Hilfe der Nadel (33) befestigt werden, die gegenüber der Unterlage verschoben werden kann und mindestens eins der Enden (4a,4b) der Fadenabschnitte (4) in die Unterlage (6) einnäht.

4. Verfahren nach einem der Ansprüche 1 bis 3,
dadurch gekennzeichnet, daß die ersten (2) und zweiten (3) Gelege im Wechsel auf der Unterlage (6) abgelegt werden.

5. Verfahren nach einem der Ansprüche 1 bis 4,
dadurch gekennzeichnet, daß Gelege (71,72,73) geradliniger Fadenabschnitte auf der Unterlage (6) abgelegt werden, indem sie mit dieser einen Winkel (α) bilden.

6. Verfahren nach Anspruch 5,
dadurch gekennzeichnet, daß der Winkel (α) kleiner oder gleich 15° ist.

7. Verfahren nach Anspruch 5 oder Anspruch 6,
dadurch gekennzeichnet, daß Gelege (71) aufeinanderfolgender geradliniger Fadenabschnitte gebildet werden, deren Fadenabschnitte (4) in Abhängigkeit von der Reihe der Gelege bei gleichem Ausgangspunkt zunehmende Längen aufweisen.

8. Verfahren nach Anspruch 7,
dadurch gekennzeichnet, daß die Länge der geradlinigen Fadenabschnitte des Geleges (71) von Reihe 1 L1 und die Länge der geradlinigen Fadenabschnitte (4) des Geleges von Reihe x Lx = xL1 ist.

9. Verfahren nach Anspruch 7 oder Anspruch 8,
dadurch gekennzeichnet, daß darüberliegende Gelege (72,73) gebildet werden, bei denen der Ausgangspunkt der geradlinigen Fadenabschnitte der Gelege jeweils gegenüber dem der darunterliegenden Gelege (71) versetzt ist.

10. Verfahren nach Anspruch 8 und Anspruch 9,
dadurch gekennzeichnet, daß für jedes darüberliegende Gelege (72,73) die Versetzung gleich L1 und die Länge der Fadenabschnitte der darüberliegenden Gelege L = nL1 ist, wobei n die Anzahl der darunterliegenden Gelege (71) ist, deren Fadenabschnitte zunehmende Längen aufweisen.

11. Maschine zur Anwendung des Verfahrens nach einem der Ansprüche 1 bis 10 derart, daß diese einen Untersatz mit einem Gestell und mit Ständern, die jeweils eine Schiene zur Anbringung einer Querstange haben, an der ein Schlitten angebracht ist, der nach einer ersten Richtung X bewegt werden kann, mit einem ersten Arm, der in einer zweiten Richtung Y rechtwinklig zur Richtung X verläuft und einen zweiten Arm hat, der sich quer zu der von der Stange und dem ersten Arm gebildeten Ebene nach einer dritten Richtung Z bewegen kann, Antriebsmittel für den Schlitten und den ersten und zweiten Arm und am zweiten Arm ein Nähwerkzeug hat, an dessen Ende sich eine Nadel befindet,
dadurch gekennzeichnet, daß das Nähwerkzeug ebenfalls zum Ablegen des Fadens dient und an einer drehbaren Halterung (41,53) angebracht ist, an deren unterem Ende die Nadel (33) angebracht ist.

12. Maschine nach Anspruch 11,
dadurch gekennzeichnet, daß die Nadel (33) hohl ist, und dadurch, daß durch die drehbare Halterung (41) ein Fadenführungskanal (41A) verläuft, der mit der Nadel verbunden ist.

13. Maschine nach Anspruch 11,
dadurch gekennzeichnet, daß die Nadel (33) ein durchgehendes schräges Nadelöhr (48) hat und mit einem Fadenführer (50) mit Gehäuse verbunden ist, durch das schräg ein Fadenführungskanal (51) verläuft, dessen unteres Ende (51A) aufgeweitet ist.

14. Maschine nach einem der Ansprüche 11 bis 13,
dadurch gekennzeichnet, daß das Ablege- und Nähwerkzeug einen Mechanismus zur Betätigung der Baugruppe Nähfuß (43), Fadenführer (50) und Nadel (33) hat, der aus einem ersten Zylinder (54) zur Betätigung einer Platine (55), an der sich die Baugruppe befindet, einer Achse (57) mit dem Fadenführer und einem zweiten Zylinder (59) zur Betätigung des Nähfußes (43) besteht.

15. Maschine nach Anspruch 14,
dadurch gekennzeichnet, daß die Nadel (33) an der Platine (55) durch eine Halterung (58) mit Hilfe einer konischen Klemme (64) gehalten wird, die durch eine Mutter (65) geklemmt wird.

16. Maschine nach Anspruch 14 oder Anspruch 15,
dadurch gekennzeichnet, daß die Achse (57) mit dem Fadenführer (50) von einer Zugfeder (62) beaufschlagt und durch einen Anschlag (63) begrenzt wird.

## Claims

1. A method for producing a reinforcement for a composite component formed by said reinforcement embedded in a cured matrix, said reinforcement including superposed plies of thread, according to which method:
- at least some of said plies are produced by laying down straight portions of thread, forming part of a continuous thread, on a support, pulling tight each portion of thread between two points for positionally fixing the ends of said portion, the ply thus consisting of portions of thread extending at least substantially in a parallel fashion with respect to each other, and the portions of thread of said ply extending in a direction which is either parallel or crossed with respect to the direction of the portions of thread of any other ply in the reinforcement; and
- all the superposed plies are consolidated by stitching, without knotting, a continuous thread passing through said plies,
characterized in that:
- said straight portions of thread (4, 5) are laid down by means of a needle (33), with respect to which the continuous thread (F), partly formed by each of said portions, can slide, said needle being capable of moving relative to said support (6), pulling tight the straight portion of thread (4, 5) above the latter, to an extent equal to the length of said straight portion of thread; and
- said straight portions of thread (4, 5) are fixed by stitching, without knotting, at least one of the ends (4a, 4b; 5a, 5b) of each of said portions of thread into said support (6) using said needle (33).

2. The method as claimed in claim 1, for a reinforcement produced on an at least substantially planar support so that said reinforcement has a panel shape, said superposed plies including at least first and second plies, each consisting of straight portions of thread extending in a parallel fashion with respect to each other, the portions of thread of the first plies extending in a first direction and the portions of thread of the second plies extending in a second direction which is crossed with respect to said first direction,
characterized in that the straight portions of thread (4, 5) of said first (2) and second (3) plies are put into place on said support (6) and fixed to it using said needle (33), moved relative to said support (6) and stitching at least one of the ends (4a, 4b; 5a, 5b) of said portions (4, 5) into said support (6).

3. The method as claimed in claim 1, for a reinforcement produced on an at least substantially cylindrical support so that said reinforcement has a corresponding cylindrical shape, said superposed plies including first plies each consisting of straight portions of thread extending in a parallel fashion with respect to each other in a first direction and second plies consisting of lengths of continuous thread which are produced by winding around said support,
characterized in that the straight portions of thread (4) of said first plies (2) are put into place on said support (6) and fixed to it using said needle (33), moved relative to said support, and stitching at least one of the ends (4a, 4b) of said portions (4) into said support (6).

4. The method as claimed in any one of claims 1 to 3, characterized in that said first (2) and second (3) plies are laid down alternately on said support (6).

5. The method as claimed in any one of claims 1 to 4, characterized in that plies (71, 72, 73) of straight portions of thread are laid down on said support (6), forming an angle (α) with respect to the surface of the latter.

6. The method as claimed in claim 5, characterized in that said angle (α) is less than or equal to 15°.

7. The method as claimed in claim 5 or claim 6, characterized in that successive plies (71) of straight portions of thread are formed, the portions of thread (4) of which have lengths which increase as a function of the row of said plies and have the same starting point.

8. The method as claimed in claim 7, characterized in that, the length of the straight portions of thread of the ply (71) of row 1 being L1, the length of the straight portions of thread (4) of the ply of row x is Lx = xL1.

9. The method as claimed in claim 7 or claim 8, characterized in that superjacent plies (72, 73) are formed for which the starting point of the straight portions of thread forming said plies is offset, each time, with respect to that of the subjacent plies (71).

10. The method as claimed in claim 8 and claim 9, characterized in that, for each superjacent ply (72, 73), said offset is equal to L1 and the length of the portions of thread forming said superjacent plies is L = nL1, where n represents the number of subjacent plies (71) for which the portions of thread have increasing lengths.

11. A machine for implementing the method according to any one of claims 1 to 10, of the type comprising a stand provided with a subframe and with uprights each having a slideway for mounting a transverse bar on which is mounted a carriage, which can move in a first, X, durection, equipped with a first arm extending in a second, Y, direction orthogonal to the X direction and carrying a second arm able to slide transversely with respect to the plane defined by said bar and said first arm in a third, Z, direction, motor means for driving said carriage and said first and second arms, and a thread-stitching tool mounted on the second arm, comprising, at its end, a needle, characterized in that said stitching tool also constitutes a tool for laying down the thread and is mounted on a rotary support (41, 53) at the lower end of which is arranged said needle (33).

12. The machine as claimed in claim 11, characterized in that said needle (33) is hollow and in that a thread-guiding channel (41A) connected to said needle passes through said rotary support (41).

13. The machine as claimed in claim 11, characterized in that said needle (33) has an oblique through-eye (48) and is associated with a thread-guide (50) comprising a body through which passes obliquely a channel (51) for passage of the thread, the lower end (51A) of said channel being flared.

14. The machine as claimed in any one of claims 11 to 13, characterized in that the laying-down and stitching tool comprises a mechanism for actuating the presser-foot (43)/thread-guide (50)/needle (33) assembly, consisting of a first cylinder actuator (54) actuating a plate (55) on which said assembly is mounted, a spindle (57) carrying the thread-guide and a second cylinder actuator (59) actuating the presser-foot (43).

15. The machine as claimed in claim 14, characterized in that said needle (33) is held in position on said plate (55) by means of a support (58), using a conical clamp (64) tightened by a nut (65).

16. The machine as claimed in claim 14 or claim 15, characterized in that the spindle (57) carrying the thread-guide (50) is stressed by a tensioning spring (62) and retained by a stop (63).
